# FASCICULE DE BREVET EUROPEEN

(11) **EP 3 481 604 B1**
(45) Date de publication et mention de la délivrance du brevet: **26.08.2020**
(21) Numéro de dépôt: 17737531.8
(22) Date de dépôt: 04.07.2017
(51) Int. Cl.: B25J 15/00, B25J 15/02

(54) **MAIN DESTINEE A EQUIPER UN ROBOT A CARACTERE HUMANOÏDE**
HAND ZUR AUSSTATTUNG EINES HUMANOIDEN ROBOTERS
HAND INTENDED TO EQUIP A HUMANOID ROBOT

(30) Priorité: 05.07.2016 FR 1656434
(43) Date de publication de la demande: 15.05.2019
(73) Titulaire: Softbank Robotics Europe, 75015 Paris (FR); Centre National de la Recherche Scientifique, 75016 Paris (FR)
(72) Inventeur: CERRUTI, Giulio, 75015 Paris (FR); CHABLAT, Damien, 44240 La Chapelle sur Erdre (FR); CLERC, Vincent, 92140 Clamart (FR); GOUAILLIER, David, 44640 Saint-Jean de Boiseau (FR)
(74) Mandataire: Honnet, Sylvie Florence Liliane
(86) Numéro de dépôt international: PCT/EP2017/066555
(87) Numéro de publication internationale: WO 2018/007346

(56) Documents cités:
- EP-A1- 1 457 294
- US-A1- 2011 144 770
- YONGKWUN LEE ET AL: "A biomimetic hand employing a dual actuation scheme", JOURNAL OF MECHANICAL SCIENCE AND TECHNOLOGY, KOREAN SOCIETY OF MECHANICAL ENGINEERS, HEIDELBERG, vol. 26, no. 12, 13 janvier 2013 (2013-01-13), pages 4131-4139, XP035164405, ISSN: 1976-3824, DOI: 10.1007/S12206-012-0881-X
- GIULIO CERRUTI ET AL: "Design method for an anthropomorphic hand able to gesture and grasp", 2015 IEEE INTERNATIONAL CONFERENCE ON ROBOTICS AND AUTOMATION (ICRA), 26 mai 2015 (2015-05-26), - 30 mai 2015 (2015-05-30), pages 3660-3667, XP055356773, DOI: 10.1109/ICRA.2015.7139707
- KIM YONG-JAE ET AL: "RoboRay hand: A highly backdrivable robotic hand with sensorless contact force measurements", 2014 IEEE INTERNATIONAL CONFERENCE ON ROBOTICS AND AUTOMATION (ICRA), IEEE, 31 mai 2014 (2014-05-31), pages 6712-6718, XP032649972, DOI: 10.1109/ICRA.2014.6907850
- WENZENG ZHANG ET AL: "A Dexterous and Self-adaptive Humanoid Robot Hand: Gesture-Changeable Under-Actuated Hand", 16 décembre 2009 (2009-12-16), INTELLIGENT ROBOTICS AND APPLICATIONS, SPRINGER BERLIN HEIDELBERG, BERLIN, HEIDELBERG, PAGE(S) 515 - 525, XP019135925, ISBN: 978-3-642-10816-7 le document en entier

## Description

L'invention concerne une main destinée à équiper un robot à caractère humanoïde. Plus précisément, elle porte sur une main dont les doigts peuvent à la fois se déplacer et saisir un objet.

La main humaine est une partie du corps humain extrêmement complexe. Elle comprend plusieurs doigts articulés autour de la paume de la main. Par ailleurs chaque doigt possède plusieurs phalanges articulées entre elles. Chaque articulation est mobile au moyen de muscles. Les différentes articulations de la main permettent la préhension d'objets de forme diverses. La position relative des doigts et de la paume permet également de réaliser des signes ou symboles permettant de communiquer un message, par exemple l'index tendu pour désigner un objet ou une direction, le pouce tendu pour signifier une approbation, etc... La maitrise des mouvements des doigts de la main revêt donc un intérêt particulier pour renforcer le caractère humanoïde d'un robot et ses capacités d'interaction. Une difficulté réside dans le grand nombre d'actionneurs nécessaires pour assurer le contrôle indépendant des mouvements des doigts.

Il est peu réaliste de piloter indépendamment le mouvement de chacune des phalanges de chacun des doigts de la main, tant pour la préhension d'objet que pour la communication d'un message visuel. On cherche en pratique à donner le plus grand nombre de possibilité de mouvements avec le plus petit nombre d'actionneurs. De manière connue, un mécanisme est dit sous-actionné lorsque le nombre d'actionneurs pilotables A est inférieur au nombre de degrés de liberté N, i.e. lorsque N > A. Le degré de sous-actionnement est alors défini comme la différence (N - A). On connait par exemple une main sous actionnée dans laquelle quatre doigts à trois phalanges et un doigt à deux phalanges peuvent être refermés par un actionneur unique. En permettant le pilotage de quatorze degrés de liberté - via quatorze liaisons pivot - au moyen d'un unique actionneur, une telle main présente un fort degré de sous-actionnement.

On a tenté d'améliorer la capacité de contrôle d'une main en conservant un fort degré de sous-actionnement de la main. On connait par exemple la mise en œuvre d'un palonnier, disposé entre l'actionneur et les doigts de manière à répartir l'effort de préhension sur chacun des doigts. La main peut ainsi, au moyen d'un unique actionneur, saisir des objets de forme diverses. La main n'est toutefois pilotable qu'entre une position ouverte et une position fermée ; la position respective de chacun des doigts en position fermée dépendant de la forme de l'objet saisi. Si aucun objet n'est interposé entre les doigts, ceux-ci se referment vers une position représentant un point fermé.

Les documents YONGKWUN LEE ET AL: "A biomimetic hand employing a dual actuation scheme", GIULIO CERRUTI ET AL: "Design method for an anthropomorphic hand able to gesture and grasp", KIM YONG-JAE ET AL: "RoboRay hand: A highly backdrivable robotic hand with sensorless contact force measurements", WENZENG ZHANG ET AL: "A Dexterous and Self-adaptive Humanoid Robot Hand: Gesture-Changeable Under-Actuated Hand", EP1457294A1 et US2011/144770A1 représentent l'état de l'art.

Pour renforcer le caractère humanoïde et ses capacités d'interaction d'un robot, il reste désirable d'augmenter les possibilités de contrôle des mouvements d'une main tout en conservant un fort degré de sous-actionnement. Bien entendu, la solution devra pouvoir s'insérer dans l'environnement structurel et fonctionnel du robot.

A cet effet, l'invention a pour objet une main destinée à équiper un robot humanoïde selon la revendication 1, la main comprenant une paume et au moins un doigt s'étendant selon un premier axe, la main étant apte à saisir un objet, le doigt comprenant une première phalange reliée à la paume par une première liaison pivot motorisée de façon à rendre la première phalange mobile en rotation autour d'un deuxième axe sensiblement perpendiculaire au premier axe, et une deuxième phalange consécutive à la première phalange reliée à la première phalange par une deuxième liaison pivot autour d'un troisième axe sensiblement parallèle au deuxième axe, caractérisée en ce que le doigt comprend :
- un premier mécanisme reliant la paume à la deuxième phalange configuré de façon à ce que la rotation de la première phalange autour du deuxième axe génère la rotation de la deuxième phalange autour du troisième axe,
- un second mécanisme reliant la paume à chacune des phalanges configuré pour actionner le doigt de façon à ce que le doigt enroule l'objet à saisir,
et en ce que le second mécanisme est configuré pour déformer le premier mécanisme.

Avantageusement, le doigt comprend une troisième phalange consécutive à la deuxième phalange reliée à la deuxième phalange par une troisième liaison pivot autour d'un quatrième axe sensiblement parallèle au troisième axe, et le premier mécanisme est configuré de façon à ce que la rotation de la première phalange autour du deuxième axe génère la rotation de la troisième phalange autour du quatrième axe.

Avantageusement, le premier mécanisme comprend une première barre ayant une première et une seconde extrémité, la première extrémité de la première barre étant en liaison pivot autour d'un cinquième axe parallèle au deuxième axe, distinct du deuxième axe et mobile en rotation autour du deuxième axe et la seconde extrémité de la première barre étant en liaison pivot autour d'un sixième axe parallèle au troisième axe, distinct du troisième axe et mobile en rotation autour du troisième axe, une seconde barre ayant une première et une seconde extrémité, la première extrémité de la seconde barre étant en liaison pivot autour d'un septième axe parallèle au troisième axe, distinct du troisième et sixième axes et mobile en rotation autour du troisième axe et la seconde extrémité de la seconde barre étant en liaison pivot autour d'un huitième axe parallèle au quatrième axe, distinct du quatrième axe et mobile en rotation autour du quatrième axe, et la première barre et la seconde barre sont des barres élastiques, l'une des barres étant configurée pour se comprimer quand le second mécanisme actionne le doigt et génère une force au niveau de la phalange adjacente inférieure à une valeur seuil et pour flamber quand le second mécanisme actionne le doigt et génère une force au niveau de la phalange adjacente supérieure à la valeur seuil, déformant le premier mécanisme.

Selon un mode de réalisation, le second mécanisme comprend un câble s'étendant de la troisième phalange jusqu'à la paume, chacune des phalanges pouvant être déplacée par rapport à la paume par entrainement du câble.

Avantageusement, au moins une des phalanges comprend une glissière destinée à guider le câble entre la troisième phalange et la paume.

Selon un autre mode de réalisation, la première barre et la seconde barre ont une élasticité différente, et l'élasticité de la première barre est inférieure à l'élasticité de la seconde barre.

Selon un autre mode de réalisation, la première barre et la seconde barre ont une élasticité différente, et l'élasticité de la première barre est supérieure à l'élasticité de la seconde barre.

Avantageusement, la première barre et la seconde barre sont en élastomère.

Avantageusement, la première barre et la seconde barre ont une section carrée.

Selon un mode de réalisation particulièrement avantageux, la main selon l'invention comprend une pluralité de doigts et un moyen de motorisation configuré pour exercer une force sur chacun des câbles de la pluralité de doigts de façon à déplacer chacune des phalanges de la pluralité de doigts pour actionner la pluralité de doigts de façon à ce que la pluralité de doigts enroule l'objet à saisir, et un mécanisme différentiel destiné à répartir la force exercée par le moyen de motorisation sur chacun des câbles de la pluralité de doigts.

L'invention porte également sur un robot à caractère humanoïde équipée d'une main ayant les caractéristiques précédemment décrites.

L'invention sera mieux comprise et d'autres avantages apparaîtront à la lecture de la description détaillée d'un mode de réalisation donné à titre d'exemple sur les figures suivantes :
- les figures 1a et 1b représentent deux exemples de robots humanoïdes pouvant être équipés de deux mains selon l'invention,
- la figure 2 représente un exemple d'un doigt de main de robot humanoïde selon l'invention,
- la figure 3 représente une vue d'un doigt de robot humanoïde constitué de plusieurs phalanges, le premier mécanisme étant rendu visible,
- la figure 4 représente le modèle cinématique du premier mécanisme,
- la figure 5 illustre le principe du déplacement d'un doigt de la main au moyen du premier mécanisme,
- la figure 6 illustre le principe de déplacement d'un doigt de la main au moyen du second mécanisme.

Par souci de clarté, les mêmes éléments porteront les mêmes repères dans les différentes figures.

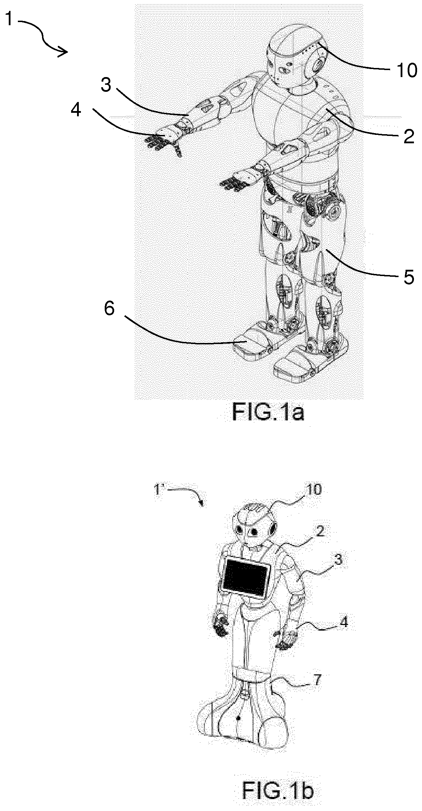

Les **figures 1a et 1b** représentent deux exemples de robots humanoïdes développés par la demanderesse. Le robot humanoïde 1 représenté en figure 1a comprend une tête 10, un tronc 2, deux bras 3, deux mains 4, deux jambes 5 et deux pieds 6. Le robot humanoïde 1' représenté en figure 1b comprend une tête 10, un tronc 2, deux bras 3, deux mains 4 et une jupe 7. L'invention porte sur une main pouvant équiper ces types de robots humanoïdes.

L'invention est décrite dans la suite dans le cas particulier d'une main 4 comprenant un doigt 20 implanté dans une paume, par exemple l'index, le majeur, l'annulaire ou l'auriculaire. Les explications sont limitées à un seul de ces doigts afin de faciliter la compréhension de l'invention. Il est bien évident que la main 4 peut comprendre plusieurs doigts 20 positionnés l'un à côté de l'autre, idéalement quatre pour représenter l'index, le majeur, l'annulaire et l'auriculaire. L'invention s'applique également à une main comprenant aussi un pouce. Le pouce disposant de deux degrés de liberté en rotation supplémentaires que les autres doigts, il nécessite deux moyens de motorisation supplémentaires et l'invention s'applique de façon analogue au pouce.

Il est bien entendu que l'invention couvre plus largement une main comprenant une paume et plusieurs doigts motorisés permettant, à la manière d'un humain, de déplacer les doigts par rapport à la paume. En outre, l'invention est mise en œuvre dans une main pour renforcer le caractère humanoïde du robot, par exemple en permettant une communication visuelle améliorée. Il est entendu que l'invention peut être mise en œuvre selon le même principe et avec les mêmes bénéfices pour d'autres organes, par exemple un pied de robot humanoïde ou une patte de robot à caractère animal. Dans la suite, le terme de main désigne de manière générale un organe comprenant une paume et des doigts motorisés par rapport à la paume.

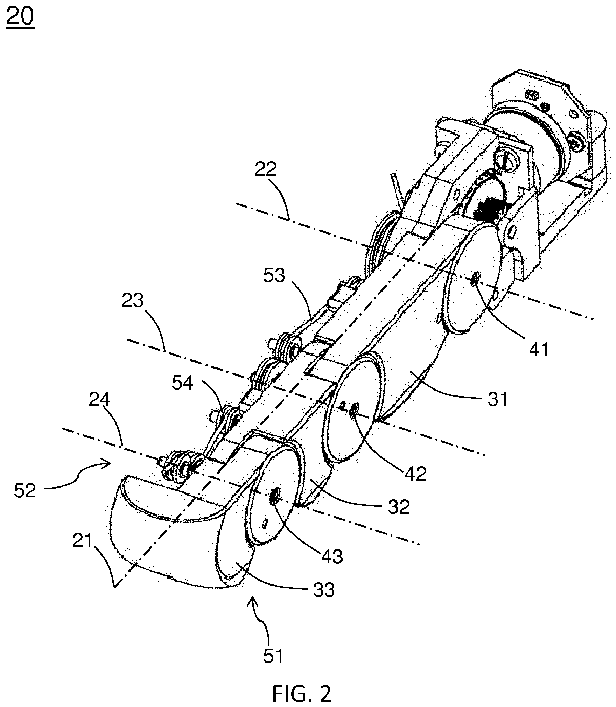

La **figure 2** représente un exemple d'un doigt de main de robot humanoïde selon l'invention. La main est destinée à équiper un robot humanoïde, la main comprenant une paume (non représentée sur la figure 2) et au moins un doigt 20 s'étendant selon un premier axe 21, la main étant apte à saisir un objet, le doigt 20 comprenant une première phalange 31 reliée à la paume par une première liaison pivot 41 motorisée de façon à rendre la première phalange 31 mobile en rotation autour d'un deuxième axe 22 sensiblement perpendiculaire au premier axe 21, et une deuxième phalange 32 consécutive à la première phalange 31 reliée à la première phalange 31 par une deuxième liaison pivot 42 autour d'un troisième axe 23 sensiblement parallèle au deuxième axe 22. Selon l'invention, le doigt 20 comprend un premier mécanisme 51 reliant la paume à la deuxième phalange 32 configuré de façon à ce que la rotation de la première phalange 31 autour du deuxième axe 22 génère la rotation de la deuxième phalange 32 autour du troisième axe 23. Le doigt 20 comprend aussi un second mécanisme 52 reliant la paume à chacune des phalanges 31, 32 configuré pour actionner le doigt 20 de façon à ce que le doigt 20 enroule l'objet à saisir. Et selon l'invention, le second mécanisme 52 est configuré pour déformer le premier mécanisme 51

L'invention s'applique à une main avec au moins un doigt. La main peut avoir deux, trois ou quatre doigts. Avantageusement, la main a cinq doigts, dans un souci de ressemblance avec une main humaine. Parmi ces cinq doigts, on retrouve l'index, le majeur, l'annulaire, l'auriculaire, qui sont reproduits par le doigt 20 selon l'invention. Le cinquième doigt est le pouce, aussi reproduit par le doigt 20 mais auquel il faut ajouter d'autres degrés de liberté pour autoriser la mobilité supplémentaire d'un pouce. Nous ne traiterons pas cet aspect dans l'invention, mais l'invention s'applique de façon similaire à un pouce et il suffit d'ajouter deux moyens de motorisation au pouce pour obtenir les degrés de liberté souhaités.

Le doigt 20 peut comprendre deux phalanges 31, 32. Il peut sur le même principe en comprendre trois, quatre ou même plus, en appliquant le même principe des première et deuxième phalanges aux phalanges consécutives. Dans cette demande, et à titre d'exemple, un doigt à trois phalanges est représenté dans le souci de reproduire au mieux un doigt humain, mais il est bien évident que l'invention ne se limite pas au cas d'une main avec des doigts à trois phalanges.

Ainsi, comme on peut le voir sur la figure 2, le doigt 20 comprend une troisième phalange 33 consécutive à la deuxième phalange 32 reliée à la deuxième phalange 32 par une troisième liaison pivot 43 autour d'un quatrième axe 24 sensiblement parallèle au troisième axe 23, et le premier mécanisme 51 est configuré de façon à ce que la rotation de la première phalange 31 autour du deuxième axe 22 génère la rotation de la troisième phalange 33 autour du quatrième axe 24.

Le second mécanisme 52 comprend un câble 53 s'étendant de la troisième phalange 33 jusqu'à la paume, chacune des phalanges 33, 32, 31 pouvant être déplacée par rapport à la paume par entrainement du câble 53. De manière plus générale, le câble 53 s'étend de la phalange la plus éloignée de la paume jusqu'à la paume.

Avantageusement, au moins une des phalanges, par exemple la deuxième phalange 32, comprend une glissière 54 destinée à guider le câble 53 entre la troisième phalange 33 et la paume. La présence de la glissière 54 au niveau de la deuxième phalange 32 est un exemple. L'invention concerne aussi une configuration avec une glissière sur une autre phalange, par exemple la première phalange ou avantageusement sur chacune des phalanges. Il est également possible d'avoir plusieurs glissières par phalange.

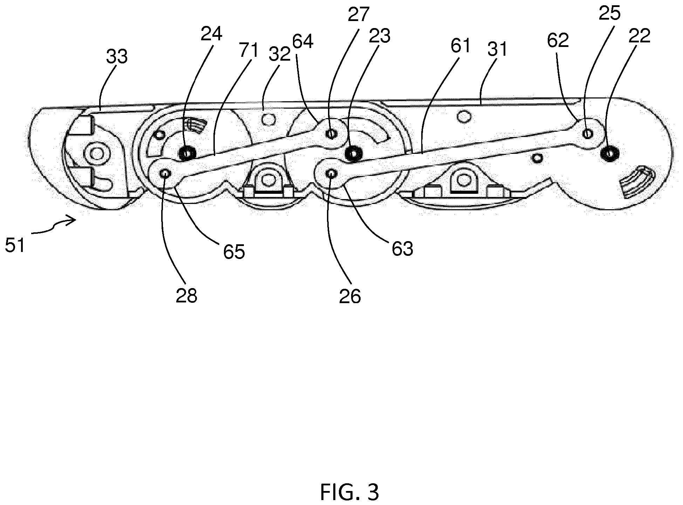

La **figure 3** représente une vue d'un doigt 20 de robot humanoïde constitué de plusieurs phalanges, le premier mécanisme 51 étant rendu visible. Selon l'invention, le premier mécanisme 51 comprend une première barre 61 ayant une première 62 et une seconde extrémité 63, la première extrémité 62 de la première barre 61 étant en liaison pivot autour d'un cinquième axe 25 parallèle au deuxième axe 22, distinct du deuxième axe 22 et mobile en rotation autour du deuxième axe 22 et la seconde extrémité 63 de la première barre 61 étant en liaison pivot autour d'un sixième axe 26 parallèle au troisième axe 23, distinct du troisième axe 23 et mobile en rotation autour du troisième axe 23. Le premier mécanisme 51 comprend une seconde barre 71 ayant une première 64 et une seconde extrémité 65, la première extrémité 64 de la seconde barre 71 étant en liaison pivot autour d'un septième axe 27 parallèle au troisième axe 23, distinct du troisième 23 et sixième 26 axes et mobile en rotation autour du troisième axe 23 et la seconde extrémité 65 de la seconde barre 71 étant en liaison pivot autour d'un huitième axe 28 parallèle au quatrième axe 24, distinct du quatrième axe 24 et mobile en rotation autour du quatrième axe 24.

Selon l'invention, la première barre 61 et la seconde barre 71 sont des barres élastiques, l'une des barres étant configurée pour se comprimer quand le second mécanisme 52 actionne le doigt 20 et génère une force au niveau de la phalange adjacente inférieure à une valeur seuil et pour flamber quand le second mécanisme 52 actionne le doigt 20 et génère une force au niveau de la phalange adjacente supérieure à la valeur seuil, déformant le premier mécanisme 51. L'interaction entre le second mécanisme 52 et le premier mécanisme 51 est abordée un peu plus loin dans la description.

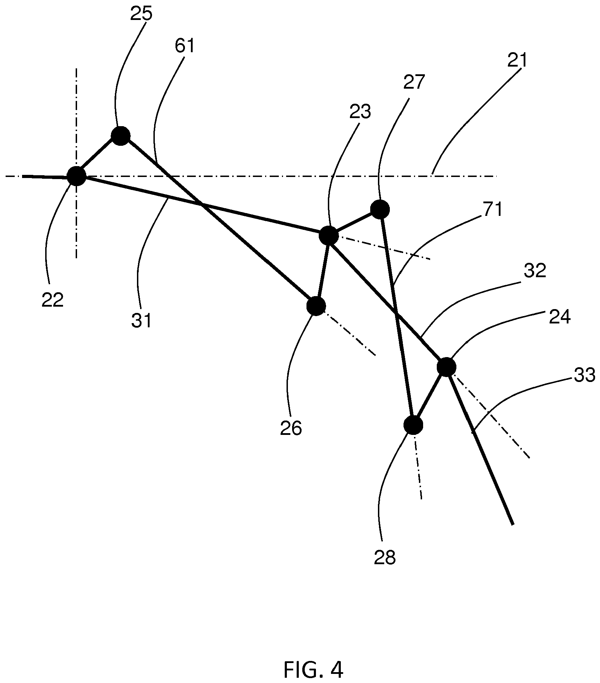

La **figure 4** représente le modèle cinématique du premier mécanisme 51. Le modèle cinématique permet de bien visionner le positionnement du premier axe 21 et des axes 22 à 28, parallèles entre eux. De même, on voit les phalanges 31, 32, 33 reliées entre elles par des liaisons pivot autour des axes 23, 24, la première phalange 31 étant reliée à la paume par la liaison pivot autour de l'axe 22. Enfin, on voit les deux barres 61 et 71 du premier mécanisme 51. Les extrémités de chacune des barres sont mobiles en rotation autour de l'axe 22 et l'axe 23 pour la première barre 61 et autour de l'axe 23 et 24 pour la seconde barre 71. En d'autres termes, les extrémités de chaque barre 61, 71 correspondent à des doubles liaisons pivot, par exemple la première extrémité 62 de la première barre 61 est mobile en rotation autour de l'axe 25 et également mobile en rotation autour de l'axe 22. Ainsi, le premier mécanisme 51 fait partie d'un ensemble de deux quadrilatères. Le premier quadrilatère est formé par la première phalange 31, la première barre 61 et le rayon entre l'axe 22 et l'axe 25 et le rayon entre l'axe 23 et l'axe 26. De même, le second quadrilatère est formé par la deuxième phalange 32, la seconde barre 71 et le rayon entre l'axe 23 et l'axe 27 et le rayon entre l'axe 24 et l'axe 28. L'entraînement en rotation de la première extrémité 62 de la première barre 61 autour de l'axe 22 génère donc le mouvement de la première phalange 31, ce qui génère, du fait de la cinématique du doigt, la rotation de la première extrémité 64 de la seconde barre 71 autour de l'axe 23 et donc le mouvement de la deuxième phalange 32. De manière analogue, la troisième phalange 33 est mise en mouvement par le fait de la rotation de son extrémité autour de l'axe 24.

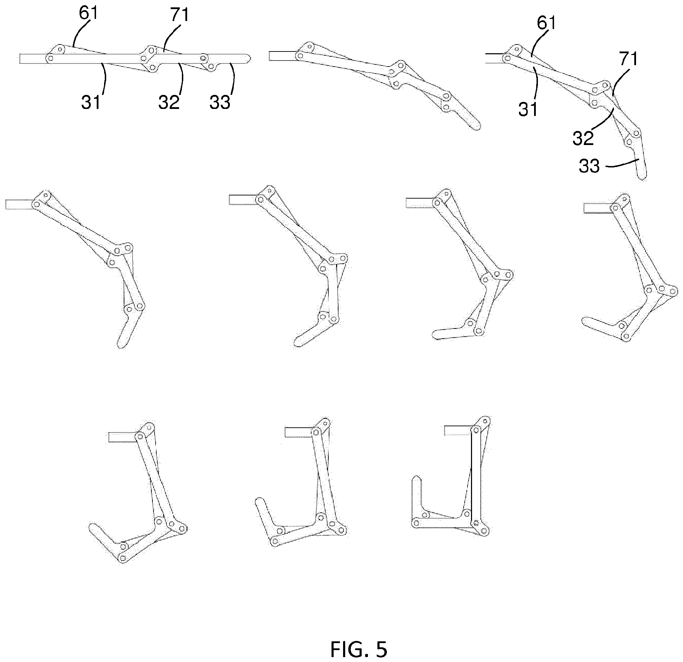

La **figure 5** illustre le principe du déplacement d'un doigt de la main au moyen du premier mécanisme, d'une position dite de repos (angle entre la paume et la première phalange de 0°) jusqu'à une position du doigt fermé (angle entre la paume et la première phalange de 90°). Sur cette figure sont représentés les deux quadrilatères mentionnés à la figure 4. Rappelons qu'un doigt ne dispose pour actionner le premier mécanisme 51 que d'une seule motorisation, au niveau de la liaison pivot autour de l'axe 22. Du fait de la cinématique du doigt 20 telle qu'expliquée à la figure 4, une seule motorisation permet donc le mouvement du doigt 20 et la gestuelle associée. Le déplacement des phalanges 31, 32, 33 est la conséquence de l'actionnement de la liaison pivot motorisée. Les deux quadrilatères, reliés au niveau de l'axe 23, permettent un mouvement combiné des barres 61 et 71 et donc des phalanges du doigt 20. La liaison pivot motorisée pilote le mouvement du premier quadrilatère, correspondant à la première phalange 31, qui a pour conséquence le mouvement du second quadrilatère, correspondant à la deuxième phalange 32.

Le premier mécanisme 51 permet ainsi le pilotage du doigt 20 de façon globale et non pas phalange par phalange. La mobilité des phalanges se fait les unes par rapport aux autres. Ce mécanisme permet une réduction du nombre d'actionneurs par doigt, une réduction de l'encombrement des mécanismes d'actionnement des phalanges et aussi une réduction des coûts de production et de maintenance.

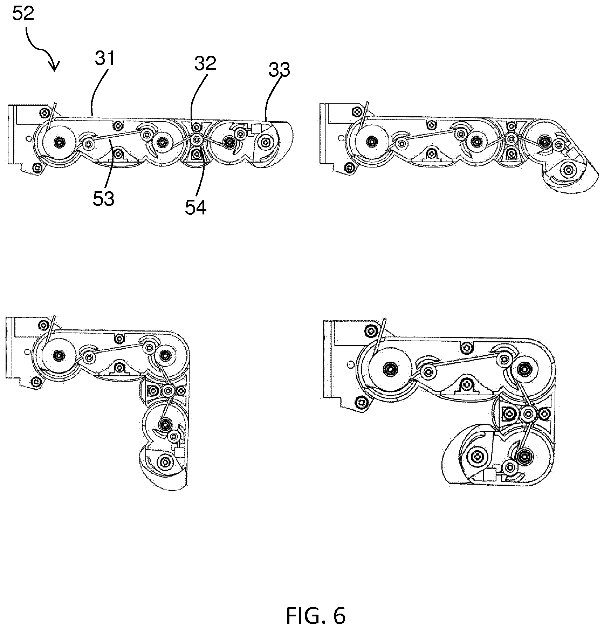

La **figure 6** illustre le principe de déplacement du doigt 20 de la main au moyen du second mécanisme 52. Comme décrit précédemment, le second mécanisme 52 comprend un câble 53 s'étendant de la troisième phalange 33 jusqu'à la paume, chacune des phalanges 33, 32, 31 pouvant être déplacée par rapport à la paume par entrainement du câble 53. De manière plus générale, le câble 53 s'étend de la phalange la plus éloignée de la paume jusqu'à la paume. On connait divers types de main sous actionnées cherchant à piloter au moyen d'un nombre limité d'actionneurs le plus grand nombre de degré de liberté des doigts de la main. Dans l'invention, la main comprend deux mécanismes. Comme nous l'avons vu, le premier mécanisme 51 permet la gestuelle générale et le second mécanisme 52 permet la saisie d'un objet. L'invention repose sur le fait que les deux mécanismes 51, 52 ne sont pas actionnés en même temps, mais l'un après l'autre. En phase d'approche du doigt vers un objet, le premier mécanisme 51 est actionné jusqu'à établir un contact avec l'objet. Ensuite, c'est le second mécanisme 52 qui est actionné.

Lorsque l'on tire sur le câble 53, et sans aucune opposition formée (c'est-à-dire sans contact avec un objet ou sans contact quelconque), le doigt bouge par exemple depuis une position de repos jusqu'à une position du doigt fermé.

Maintenant, lorsqu'on tire sur le câble 53, si on saisit un objet, une phalange, par exemple la première phalange 31, entre en contact avec l'objet et l'objet fait opposition au mouvement du doigt. On tire alors plus fort sur le câble 53, et comme l'objet fait opposition au mouvement de la première phalange 31, une force axiale de compression est appliquée à la première barre 61, qui flambe. Une fois la barre flambée, le premier mécanisme 51 est donc déformé. Le premier mécanisme 51 est découplé du second mécanisme 52, qui, lui, poursuit son action en tirant sur le câble 53 pour que les phalanges 32, 33 s'enroulent autour de l'objet pour le saisir.

L'idée générale de la présente invention est de coupler, pour chaque doigt 20, le mouvement de rotation du doigt 20 par rapport à la paume et la saisie d'un objet tout en conservant un degré de sous actionnement intéressant en vue d'une implantation dans un robot à caractère humanoïde. L'invention consiste à entrainer un doigt de la position de repos selon le premier axe 21, par rotation de la liaison pivot motorisée, jusqu'à une position de contact avec l'objet par mise en œuvre du premier mécanisme 51 et d'entrainer ce doigt de la position de contact avec l'objet jusqu'à la position de saisie de l'objet, c'est-à-dire quand le doigt enroule l'objet à saisir, par mise en œuvre du second mécanisme 52. L'invention exploite avantageusement les deux mécanismes 51, 52 pour permettre deux mouvements distincts du doigt, à savoir celui de mouvement général du doigt et celui de saisie d'un objet, en ne nécessitant qu'un moyen de motorisation par doigt pour le premier mécanisme 51 et un moyen de motorisation pour tous les doigts pour le second mécanisme 52.

Comme déjà dit, la première barre 61 et la seconde barre 71 sont des barres élastiques. L'une des barres, par exemple la première barre 61 est configurée pour se comprimer quand le second mécanisme 52 actionne le doigt 20. En actionnant le doigt 20, le second mécanisme 52 tend à fermer le doigt et agit comme une force extérieure appliquée sur la deuxième phalange 32. Autrement dit, en actionnant le doigt, le second mécanisme 52 génère une force au niveau de la phalange adjacente. Tant que la valeur de la force appliquée à la phalange 32 est inférieure à une valeur seuil, le doigt poursuit son mouvement de fermeture, les barres 61, 71 poursuivent leur mouvement en rotation autour de leurs liaisons pivot respectives. La barre 61, du fait de la cinématique des quadrilatères, est comprimée. Dès que la valeur de la force appliquée à la phalange 32 est supérieure à une valeur seuil, la barre 61 comprimée flambe. En d'autres termes, le premier mécanisme 51 se déforme. Une fois la barre 61 flambée, le doigt 20 n'est actionné que par le second mécanisme 52. Le doigt enroule alors l'objet à saisir par mise en œuvre du second mécanisme 52. Les phalanges 31, 32, 33 se referment alors sur l'objet à saisir. La pliure des phalanges sur l'objet est adaptée à la taille et à la forme de l'objet à saisir. En d'autres termes, l'invention permet, sans utilisation de capteurs et seulement grâce à la conception du premier mécanisme 51, au doigt de s'adapter à la forme de l'objet et d'exercer un effort dosé partout sur l'objet.

De manière plus générale, pour une barre, que ce soit la première barre 61 ou la seconde barre 71, une force axiale le long de la barre varie de la compression à l'étirement selon la configuration du doigt 20. La barre d'une phalange est comprimée à chaque fois qu'une force extérieure essaie de fermer la phalange adjacente. Au contraire, la barre est étirée quand une force extérieure pousse la phalange de la barre à s'ouvrir.

Ainsi, si on reprend l'exemple précédent, une fois le doigt en position de saisie, c'est-à-dire quand le doigt enroule l'objet suite au flambage de la première barre 61 par mise en œuvre du second mécanisme 52, l'objet est saisi, on ne tire plus sur le câble 53. Il n'y a alors plus de force de compression appliquée à la barre 61. La barre 61 s'étire. Et le premier mécanisme 51 reprend son statut d'avant flambage de la barre 61.

Grâce au principe de l'invention, il est donc possible d'activer le doigt 20 dans une gestuelle générale avec le premier mécanisme et dans la saisie avec le second mécanisme sans dispositif supplémentaire de commande pour passer du premier mécanisme au second mécanisme et inversement. Le passage du premier mécanisme au second mécanisme se fait par activation du second mécanisme qui déforme le premier mécanisme par flambage d'une de ses barres. Afin d'avoir une bonne interaction entre la gestuelle générale et la saisie, il faut au préalable un bon dimensionnement des barres 61 et 71.

Les barres 61 et 71 doivent pouvoir supporter les forces de compression et d'étirement qu'elles vont subir pendant leur durée de vie. Chacune des barres a une élasticité. Les constantes d'élasticité des barres 61, 71 sont telles que les barres puissent résister aux forces de compression sans flamber lorsque le flambage n'est pas souhaité, mais les barres 61, 71 doivent pouvoir flamber à une certaine valeur de seuil déterminée en fonction de la configuration du doigt et des forces appliquées au doigt. Les barres doivent être assez rigides pour soutenir l'effort mais pas trop pour ne pas perdre d'énergie pour contrer l'effort des barres lors de l'activation du second mécanisme 52 pour la saisie d'un objet.

La première barre 61 et la seconde barre 71 peuvent avoir une élasticité différente, et l'élasticité de la première barre 61 peut être inférieure à l'élasticité de la seconde barre 71. Cette configuration permet de dépenser moins d'énergie dans le mouvement du doigt. Il est nécessaire de prévoir l'élasticité des barres telles que chaque barre puisse supporter le poids de la phalange correspondante elle-même, pour contrer la gravité. Lorsque le câble 53 du second mécanisme 52 est tiré, la seconde barre 71 flambe plus facilement quand un objet fait opposition, ce qui signifie qu'il faut moins de force à appliquer sur la barre pour la faire flamber.

Alternativement, la première barre 61 et la seconde barre 71 peuvent avoir une élasticité différente, et l'élasticité de la première barre 61 peut être supérieure à l'élasticité de la seconde barre 71. Cette configuration permet une meilleure adaptation du doigt à la forme de l'objet. En effet, en actionnant le câble 53, les barres 61 et 71 vont subir une certaine force axiale de compression. La première barre 61 va flamber plus facilement que la seconde barre 71. Il en résulte une saisie de l'objet comparable à une saisie d'objet par un doigt humain, avec un enroulement des deuxième et troisième phalanges autour de l'objet à saisir.

Une attention toute particulière doit donc être accordée au dimensionnement des constantes d'élasticité des barres 61 et 71 en fonction de leur géométrie et de la force critique désirée au-delà de laquelle chaque barre flambe.

Avantageusement, la première barre 61 et la seconde barre 71 sont en élastomère.

La première barre 61 et la seconde barre 71 ont de façon avantageuse une section carrée pour en faciliter la fabrication à une échelle industrielle, par exemple par coupe au laser ou par jets d'eau.

La main selon l'invention comprend un moyen de motorisation configuré pour exercer une force sur chacun des câbles 53 de la pluralité de doigts 20 de façon à déplacer chacune des phalanges 31, 32, 33 de la pluralité de doigts 20 pour actionner la pluralité de doigts de façon à ce que la pluralité de doigts enroule l'objet à saisir. Avantageusement, la main peut comprendre un mécanisme différentiel destiné à répartir la force exercée par le moyen de motorisation sur chacun des câbles de la pluralité de doigts.

Ainsi, dans une main sous-actionnée, comme celle de l'invention, limitant au maximum le nombre d'actionneurs, les câbles 53 de chacun des doigts 20 sont reliés à un unique actionneur, ou moyen de motorisation, capable de déplacer simultanément tous les doigts 20 de la position de repos vers une position de saisie d'objet. Pour permettre la préhension d'objets de formes variées, on a aussi envisagé comme mentionné précédemment d'interposer un mécanisme différentiel, par exemple un palonnier, entre le moyen de motorisation et les câbles 53 de chacun des doigts 20, de sorte à répartir l'effort de traction transmis aux différents câbles 53.

L'invention concerne aussi un robot à caractère humanoïde équipée d'une main telle que décrite précédemment, comme représenté sur les figures 1a et 1b.

## Revendications

1. Main (4) destinée à équiper un robot humanoïde, la main (4) comprenant une paume et au moins un doigt (20) s'étendant selon un premier axe (21), la main (4) étant apte à saisir un objet, le doigt (20) comprenant une première phalange (31) reliée à la paume par une première liaison pivot (41) motorisée de façon à rendre la première phalange (31) mobile en rotation autour d'un deuxième axe (22) sensiblement perpendiculaire au premier axe (21), et une deuxième phalange (32) consécutive à la première phalange (31) reliée à la première phalange (31) par une deuxième liaison pivot (42) autour d'un troisième axe (23) sensiblement parallèle au deuxième axe (22),
**caractérisée en ce que** le doigt (20) comprend :
• un premier mécanisme (51) reliant la paume à la deuxième phalange (32) configuré de façon à ce que la rotation de la première phalange (31) autour du deuxième axe (22) génère la rotation de la deuxième phalange (32) autour du troisième axe (23),
• un second mécanisme (52) reliant la paume à chacune des phalanges (31, 32) configuré pour actionner le doigt (20) de façon à ce que le doigt (20) enroule l'objet à saisir,
et **en ce que** le second mécanisme (52) est configuré pour déformer le premier mécanisme (51),
**en ce que** le doigt (20) comprend une troisième phalange (33) consécutive à la deuxième phalange (32) reliée à la deuxième phalange (32) par une troisième liaison pivot (43) autour d'un quatrième axe (24) sensiblement parallèle au troisième axe (23), **en ce que** le premier mécanisme (51) est configuré de façon à ce que la rotation de la première phalange (31) autour du deuxième axe (22) génère la rotation de la troisième phalange (33) autour du quatrième axe (24),
**en ce que** le premier mécanisme (51) comprend :
• une première barre (61) ayant une première (62) et une seconde extrémité (63), la première extrémité (62) de la première barre (61) étant en liaison pivot autour d'un cinquième axe (25) parallèle au deuxième axe (22), distinct du deuxième axe (22) et mobile en rotation autour du deuxième axe (22) et la seconde extrémité (63) de la première barre (61) étant en liaison pivot autour d'un sixième axe (26) parallèle au troisième axe (23), distinct du troisième axe (23) et mobile en rotation autour du troisième axe (23),
• une seconde barre (71) ayant une première (64) et une seconde extrémité (65), la première extrémité (64) de la seconde barre (71) étant en liaison pivot autour d'un septième axe (27) parallèle au troisième axe (23), distinct du troisième (23) et sixième (26) axes et mobile en rotation autour du troisième axe (23) et la seconde extrémité (65) de la seconde barre (71) étant en liaison pivot autour d'un huitième axe (28) parallèle au quatrième axe (24), distinct du quatrième axe (24) et mobile en rotation autour du quatrième axe (24),
et **en ce que** la première barre (61) et la seconde barre (71) sont des barres élastiques, l'une des barres (61, 71) étant configurée pour se comprimer quand le second mécanisme (52) actionne le doigt (20) et génère une force au niveau de la phalange consécutive inférieure à une valeur seuil et pour flamber quand le second mécanisme (52) actionne le doigt (20) et génère une force au niveau de la phalange consécutive supérieure à la valeur seuil, déformant le premier mécanisme (51).

2. Main (4) selon la revendication 1, **caractérisée en ce que** le second mécanisme (52) comprend un câble (53) s'étendant de la troisième phalange (33) jusqu'à la paume, chacune des phalanges (31, 32, 33) pouvant être déplacée par rapport à la paume par entrainement du câble (53).

3. Main (4) selon la revendication 2, **caractérisée en ce qu'**au moins une des phalanges (31, 32, 33) comprend une glissière destinée à guider le câble (53) entre la troisième phalange (33) et la paume.

4. Main (4) selon l'une quelconque des revendications 1 à 3, **caractérisée en ce que** la première barre (61) et la seconde barre (71) ont une élasticité différente, et **en ce que** l'élasticité de la première barre (61) est inférieure à l'élasticité de la seconde barre (71).

5. Main (4) selon l'une quelconque des revendications 1 à 3, **caractérisée en ce que** la première barre (61) et la seconde barre (71) ont une élasticité différente, et **en ce que** l'élasticité de la première barre (61) est supérieure à l'élasticité de la seconde barre (71).

6. Main (4) selon l'une quelconque des revendications 1 à 5, **caractérisée en ce que** la première barre (61) et la seconde barre (71) sont en élastomère.

7. Main (4) selon l'une quelconque des revendications 1 à 6, **caractérisée en ce que** la première barre (61) et la seconde barre (71) ont une section carrée.

8. Main (4) selon l'une quelconque des revendications 2 à 7, **caractérisée en ce qu'**elle comprend une pluralité de doigts (20) selon l'une quelconque des revendications 4 à 9, et **en ce qu'**elle comprend :
• un moyen de motorisation configuré pour exercer une force sur chacun des câbles (53) de la pluralité de doigts (20) de façon à déplacer chacune des phalanges (31, 32, 33) de la pluralité de doigts (20) pour actionner la pluralité de doigts (20) de façon à ce que la pluralité de doigts (20) enroule l'objet à saisir,
• un mécanisme différentiel destiné à répartir la force exercée par le moyen de motorisation sur chacun des câbles (53) de la pluralité de doigts (20).

9. Robot (1, 1') à caractère humanoïde équipée d'une main (4) selon la revendication précédente.

## Patentansprüche

1. Hand (4) zur Ausstattung eines humanoiden Roboters, wobei die Hand (4) eine Handinnenfläche und mindestens einen Finger (20) beinhaltet, welcher sich entlang einer ersten Achse (21) erstreckt, wobei die Hand (4) in der Lage ist, ein Objekt zu ergreifen, wobei der Finger (20) ein erstes Fingerglied (31) beinhaltet, welches mit der Handinnenfläche durch eine erste motorisierte Schwenkverbindung (41) so verbunden ist, dass das erste Fingerglied (31) drehbar um eine zweite, im Wesentlichen zur ersten Achse (21) senkrechte Achse (22) beweglich gemacht wird, und ein zweites Fingerglied (32), folgend auf das erste Fingerglied (31), welches mit dem ersten Fingerglied (31) durch eine zweite Schwenkverbindung (42) um eine dritte Achse (23) verbunden ist, welche im Wesentlichen parallel zur zweiten Achse (22) ist,
**dadurch gekennzeichnet, dass** der Finger (20) Folgendes beinhaltet:
• einen ersten Mechanismus (51), welcher die Handinnenfläche mit dem zweiten Fingerglied (32) verbindet, so konfiguriert, dass die Drehung des ersten Fingergliedes (31) um die zweite Achse (22) die Drehung des zweiten Fingergliedes (32) um die dritte Achse (23) erzeugt,
• einen zweiten Mechanismus (52), welcher die Handinnenfläche mit jedem der Fingerglieder (31, 32) verbindet, konfiguriert, um den Finger (20) so zu betätigen, dass der Finger (20) das zu ergreifende Objekt einwickelt,
und dadurch, dass der zweite Mechanismus (52) konfiguriert ist, um den ersten Mechanismus (51) zu verformen,
dadurch, dass der Finger (20) ein auf das zweite Fingerglied (32) folgendes drittes Fingerglied (33) beinhaltet, welches mit dem zweiten Fingerglied (32) durch eine dritte Schwenkverbindung (43) um eine vierte Achse (24) verbunden ist, welche im Wesentlichen parallel zur dritten Achse (23) ist, dadurch, dass der erste Mechanismus (51) so konfiguriert ist, dass die Drehung des ersten Fingergliedes (31) um die zweite Achse (22) die Drehung des dritten Fingergliedes (33) um die vierte Achse (24) erzeugt,
dadurch, dass der erste Mechanismus (51) Folgendes beinhaltet:
• eine erste Stange (61) mit einem ersten (62) und einem zweiten Ende (63), wobei das erste Ende (62) der ersten Stange (61) in Schwenkverbindung um eine fünfte Achse (25) parallel zur zweiten Achse (22) steht, welche sich von der zweiten Achse (22) unterscheidet und drehbar um die zweite Achse (22) beweglich ist und das zweite Ende (63) der ersten Stange (61) in Schwenkverbindung um eine sechste Achse (26) parallel zur dritten Achse (23) steht, welche sich von der dritten Achse (23) unterscheidet und drehbar um die dritte Achse (23) beweglich ist,
• eine zweite Stange (71) mit einem ersten (64) und einem zweiten Ende (65), wobei das erste Ende (64) der zweiten Stange (71) in Schwenkverbindung um eine siebente Achse (27) parallel zur dritten Achse (23) steht, welche sich von der dritten (23) und der sechsten Achse (26) unterscheidet und drehbar um die dritte Achse (23) beweglich ist und das zweite Ende (65) der zweiten Stange (71) in Schwenkverbindung um eine achte Achse (28) parallel zur vierten Achse (24) steht, welche sich von der vierten Achse (24) unterscheidet und drehbar um die vierte Achse (24) beweglich ist,
und dadurch, dass die erste Stange (61) und die zweite Stange (71) elastische Stangen sind, wobei eine der Stangen (61, 71) konfiguriert ist, um sich zu komprimieren, wenn der zweite Mechanismus (52) den Finger (20) betätigt und eine Kraft auf Höhe des folgenden Fingergliedes erzeugt, welche einen Schwellenwert unterschreitet, und um sich durchzuknicken, wenn der zweite Mechanismus (52) den Finger (20) betätigt und eine Kraft auf Höhe des folgenden Fingergliedes erzeugt, welche den Schwellenwert überschreitet, wodurch sie den ersten Mechanismus (51) verformt.

2. Hand (4) nach Anspruch 1, **dadurch gekennzeichnet, dass** der zweite Mechanismus (52) ein Kabel (53) beinhaltet, welches sich vom dritten Fingerglied (33) bis zur Handinnenfläche erstreckt, wobei jedes der Fingerglieder (31, 32, 33) in Bezug auf die Handinnenfläche durch Antrieb des Kabels (53) bewegt werden kann.

3. Hand (4) nach Anspruch 2, **dadurch gekennzeichnet, dass** mindestens eines der Fingerglieder (31, 32, 33) eine Gleitschiene beinhaltet, welche zum Führen des Kabels (53) zwischen dem dritten Fingerglied (33) und der Handinnenfläche bestimmt ist.

4. Hand (4) nach einem der Ansprüche 1 bis 3, **dadurch gekennzeichnet, dass** die erste Stange (61) und die zweite Stange (71) eine unterschiedliche Elastizität aufweisen und dadurch, dass die Elastizität der ersten Stange (61) die Elastizität der zweiten Stange (71) unterschreitet.

5. Hand (4) nach einem der Ansprüche 1 bis 3, **dadurch gekennzeichnet, dass** die erste Stange (61) und die zweite Stange (71) eine unterschiedliche Elastizität aufweisen und dadurch, dass die Elastizität der ersten Stange (61) die Elastizität der zweiten Stange (71) überschreitet.

6. Hand (4) nach einem der Ansprüche 1 bis 5, **dadurch gekennzeichnet, dass** die erste Stange (61) und die zweite Stange (71) aus Elastomer bestehen.

7. Hand (4) nach einem der Ansprüche 1 bis 6, **dadurch gekennzeichnet, dass** die erste Stange (61) und die zweite Stange (71) einen quadratischen Querschnitt aufweisen.

8. Hand (4) nach einem der Ansprüche 2 bis 7, **dadurch gekennzeichnet, dass** sie eine Vielzahl von Fingern (20) nach einem der Ansprüche 4 bis 9 beinhaltet, und dadurch, dass sie Folgendes beinhaltet:
• Motorisierungsmittel, konfiguriert zum Ausüben einer Kraft auf jedes der Kabel (53) der Vielzahl von Fingern (20) derart, dass jedes der Fingerglieder (31, 32, 33) der Vielzahl von Fingern (20) bewegt wird, um die Vielzahl von Fingern (20) so zu betätigen, dass die Vielzahl von Fingern (20) das zu ergreifende Objekt einwickelt,
• einen Differenzialmechanismus, welcher dazu bestimmt ist, die durch das Motorisierungsmittel ausgeübte Kraft auf jedes der Kabel (53) der Vielzahl von Fingern (20) zu verteilen.

9. Humanoider Roboter (1, 1'), ausgestattet mit einer Hand (4) nach dem vorhergehenden Anspruch.

## Claims

1. A hand (4) intended to equip a humanoid robot, the hand (4) comprising a palm and at least one finger (20) extending along a first axis (21), the hand (4) being able to grasp an object, the finger (20) comprising a first phalanx (31) linked to the palm by a first motorized pivot link (41) so as to render the first phalanx (31) rotationally mobile about a second axis (22) substantially perpendicular to the first axis (21), and a second phalanx (32), consecutive to the first phalanx (31), linked to the first phalanx (31) by a second pivot link (42) about a third axis (23) substantially parallel to the second axis (22),
**characterized in that** the finger (20) comprises:
• a first mechanism (51) linking the palm to the second phalanx (32), configured in such a way that the rotation of the first phalanx (31) about the second axis (22) generates the rotation of the second phalanx (32) about the third axis (23),
• a second mechanism (52) linking the palm to each of the phalanges (31, 32), configured to actuate the finger (20) in such a way that the finger (20) wraps around the object to be grasped,
and **in that** the second mechanism (52) is configured to deform the first mechanism (51),
**in that** the finger (20) comprises a third phalanx (33) consecutive to the second phalanx (32), linked to the second phalanx (32) by a third pivot link (43) about a fourth axis (24) substantially parallel to the third axis (23), **in that** the first mechanism (51) is configured in such a way that the rotation of the first phalanx (31) about the second axis (22) generates the rotation of the third phalanx (33) about the fourth axis (24),
**in that** the first mechanism (51) comprises:
• a first bar (61) having a first (62) and a second end (63), the first end (62) of the first bar (61) being pivot-linked about a fifth axis (25) parallel to the second axis (22), distinct from the second axis (22) and rotationally mobile about the second axis (22) and the second end (63) of the first bar (61) being pivot-linked about a sixth axis (26) parallel to the third axis (23), distinct from the third axis (23) and rotationally mobile about the third axis (23),
• a second bar (71) having a first (64) and a second end (65), the first end (64) of the second bar (71) being pivot-linked about a seventh axis (27) parallel to the third axis (23), distinct from the third (23) and sixth (26) axes and rotationally mobile about the third axis (23) and the second end (65) of the second bar (71) being pivot-linked about an eighth axis (28) parallel to the fourth axis (24), distinct from the fourth axis (24) and rotationally mobile about the fourth axis (24),
and **in that** the first bar (61) and the second bar (71) are elastic bars, one of the bars (61, 71) being configured to be compressed when the second mechanism (52) actuates the finger (20) and generates a force below a threshold value on the consecutive phalanx and to buckle when the second mechanism (52) actuates the finger (20) and generates a force above the threshold value on the consecutive phalanx, deforming the first mechanism (51).

2. The hand (4) as claimed in claim 1, **characterized in that** the second mechanism (52) comprises a cable (53) extending from the third phalanx (33) to the palm, each of the phalanges (31, 32, 33) being able to be displaced relative to the palm by driving of the cable (53).

3. The hand (4) as claimed in claim 2, **characterized in that** at least one of the phalanges (31, 32, 33) comprises a guide runner intended to guide the cable (53) between the third phalanx (33) and the palm.

4. The hand (4) as claimed in any one of claims 1 to 3, **characterized in that** the first bar (61) and the second bar (71) have a different elasticity, and **in that** the elasticity of the first bar (61) is lesser than the elasticity of the second bar (71).

5. The hand (4) as claimed in any one of claims 1 to 3, **characterized in that** the first bar (61) and the second bar (71) have a different elasticity, and **in that** the elasticity of the first bar (61) is greater than the elasticity of the second bar (71).

6. The hand (4) as claimed in any one of claims 1 to 5, **characterized in that** the first bar (61) and the second bar (71) are made of elastomer.

7. The hand (4) as claimed in any one of claims 1 to 6, **characterized in that** the first bar (61) and the second bar (71) have a square section.

8. The hand (4) as claimed in any one of claims 2 to 7, **characterized in that** it comprises a plurality of fingers (20) as claimed in any one of claims 4 to 9, and **in that** it comprises:
• a motorization means configured to exert a force on each of the cables (53) of the plurality of fingers (20) so as to displace each of the phalanges (31, 32, 33) of the plurality of fingers (20) to actuate the plurality of fingers (20) in such a way that the plurality of fingers (20) wraps around the object to be grasped,
• a differential mechanism intended to distribute the force exerted by the motorization means over each of the cables (53) of the plurality of fingers (20).

9. A humanoid robot (1, 1') equipped with a hand (4) as claimed in the preceding claim.
